# FASCICULE DE BREVET EUROPEEN

(11) **EP 0 231 707 B1**
(45) Date de publication et mention de la délivrance du brevet: **28.07.1993**
(21) Numéro de dépôt: 86402910.3
(22) Date de dépôt: 23.12.1986
(51) Int. Cl.: G01S 15/87, E21B 41/00, E21B 43/013, F16L 1/028

(54) **Méthode et dispositif de positionnement d'un élément utilisant des capteurs à ultrasons**
Verfahren und Einrichtung zur Lagebestimmung eines Elements mit Ultraschallwandlern
Method and device for positioning an element using ultrasonic transducers

(30) Priorité: 30.12.1985 FR 8519462
(43) Date de publication de la demande: 12.08.1987
(73) Titulaire: INSTITUT FRANCAIS DU PETROLE, 92502 Rueil-Malmaison (FR); COFLEXIP, 75116 Paris (FR)
(72) Inventeur: Levallois, Emile, F-92400 Courbevoie (FR)

(56) Documents cités:
- FR-A- 2 517 068
- REVUE GENERALE DE L'ELECTRICITE, no. 11, 1984, pages 730-733, Paris, FR; E. LEVALLOIS et al.: "Un nouveau dispositif pour connexion sous-marine"

## Description

La présente invention, concerne une méthode et un dispositif pour déterminer la position d'un élément éventuellement immergé dans un milieu liquide.

La présente invention peut permettre de mettre dans une position relative déterminée deux éléments éventuellement immergés dans un milieu liquide.

Lors de travaux effectués au fond de la mer, on est par exemple conduit à placer deux éléments distincts dans une position relative déterminée en vue, notamment, de réaliser leur raccordement (voir brevet français 2.136.291). Ces éléments peuvent être deux canalisations qui doivent être raccordées bout à bout, ou encore une canalisation et une structure immergée, telle qu'un puits ou un collecteur immergé du type collecteur manifold pétrolier, etc...

Ces opérations, déjà difficiles à réaliser lorsqu'elles sont effectuées sous le contrôle direct de plongeurs, posent des problèmes lorsqu'on utilise des "robots" équipés d'au moins une caméra de télévision et d'un matériel d'éclairage. Dans ce cas, l'opérateur, qui est en surface, contrôle visuellement les opérations d'assemblage et commande en conséquence les bras manipulateurs du robot.

Cette solution, outre son coût élevé, présente des inconvénients qui résultent du fait que l'espace contrôlé visuellement par l'opérateur est de dimension relativement faible. En effet, l'éclairage ne permet tout au plus la vision que dans un espace de quelques mètres de diamètre et souvent même ne dépassant pas deux mètres. Ce champ optique est souvent obscurci par les sédiments meubles du fond de la mer qui sont remués par le déplacement de l'eau consécutif au mouvement des pièces à assembler. Dans certains cas, le champ optique est inexistant. Enfin, la précision de l'assemblage est limitée par le fait que, le plus souvent, l'opérateur ne dispose que d'une image à deux dimensions pour le contrôle visuel.

La présente invention permet la réalisation du positionnement relatif précis de deux axes géométriques appartenant respectivement à deux éléments, par une méthode et un appareillage de conception simple, d'un coût relativement faible et ne présentant pas les inconvénients des dispositifs antérieurs. La mise en oeuvre de la présente invention nécessite un nombre de capteurs inférieur à celui nécessaire selon le brevet FR-2.517.068 de plus la présente invention peut être mise en oeuvre, dans un milieu qui n'est pas conducteur d'électricité.

La présente invention concerne une méthode de positionnement d'un élément par rapport à au moins un couple de capteur émetteurs-récepteurs acoustiques, ledit élément présentant un axe. Cette méthode se caractérise en ce que l'on émet des signaux au moyen desdits capteurs acoustiques en direction de l'élément, ledits signaux étant émis chacun sous la forme d'un lobe d'émission-réception de forme déterminée, on fait décrire ensuite à l'élément de petits mouvements jusqu'à apparition d'échos d'amplitude déterminée provenant des ondes acoustiques diffractées par ledit élément en repérant les positions relatives de l'élément par rapport au couple de capteurs et à la réception des ondes diffractées et on positionne l'élément au centre du segment limité par lesdites positions relatives déterminées à l'étape précédente.

Ainsi plus particulièrement, on ne tient compte dudit signal reçu que si l'angle que fait l'axe d'émission dudit capteur avec un plan de ladite cible est inférieur à 90° au moment où l'on reçoit ledit signal au cours d'un déplacement relatif de ladite cible et dudit capteur.

Selon la présente invention on peut former au moins un couple de deux capteurs dont les axes d'émission appartiennent à un même plan et dont les axes d'émission forment entre eux un angle non nul, le point de rencontre desdits axes étant situé en amont desdits capteurs, en considérant leur sens d'émission.

Selon la présente invention on utilise des capteurs émetteurs-récepteurs acoustiques.

Les capteurs peuvent comprendre au moins trois capteurs acoustiques ayant des directions d'émission divergentes différentes.

Les trois capteurs acoustiques peuvent comporter quatre capteurs ayant des directions d'émission divergentes.

Les capteurs pourront être répartis sur un cercle et l'axe d'émission de chaque capteur pourra faire un angle égal ou supérieur à 5° avec un axe central perpendiculaire au plan contenant ledit cercle, cet axe passant par le centre dudit cercle. Chaque point de rencontre desdits axes d'émission avec ledit axe central sera situé en avant dudit cercle en considérant le sens d'émission des capteurs.

Les trois capteurs peuvent être positionnés sensiblement dans un même plan de façon à ce que les directions d'émission divergentes sont orientées dans un même demi-espace, lequel est limité par ledit plan.

La présente invention sera mieux comprise et ces avantages apparaîtront plus clairement à la description qui suit d'exemples particuliers, nullement limitatifs, illustrés par les figures annexées parmi lesquelles :
- la figure 1 représente un capteur acoustique et son lobe d'émission,
- la figure 2 représente des signaux obtenus par le balayage d'une cible au moyen d'un capteur acoustique émetteur-récepteur, sous différents angles d'émission,
- la figure 3 illustre schématiquement la manière dont le balayage précédent a été effectué,
- les figures 4 et 5 illustrent un mode de réalisation du dispositif selon l'invention permettant la localisation d'un élément, et
- les figures 6 à 9 illustrent une procédure de localisation d'un élément.

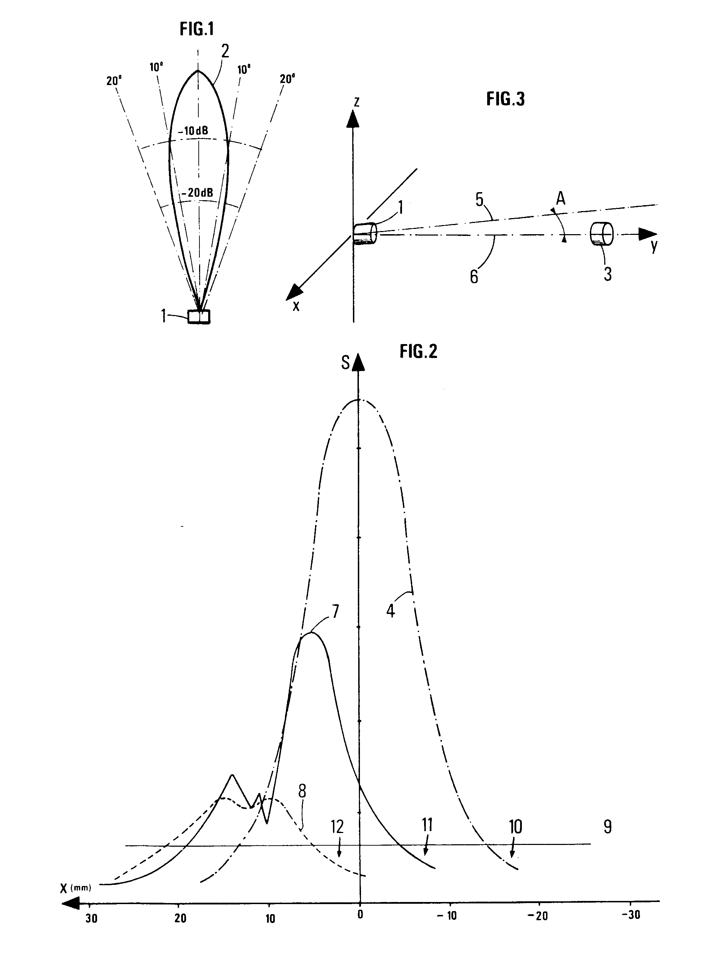

Afin de faciliter la compréhension de la présente invention, il est nécessaire de faire les remarques qui suivent :
- chaque capteur fonctionne à la fois en récepteur et en émetteur, il reçoit donc un écho de sa propre émission constitué d'une impulsion de très faible durée.
- les capteurs 1 à ultrasons, figure 1, utilisés dans les exemples donnés ci-après ont un diagramme d'émission/réception sensiblement identique à celui de la figure 1. On appelle ouverture du lobe 2 l'angle fourni par les deux tangentes à atténuation infinie.
- Il existe trois zones pour un capteur dans le cas où ce dernier vise perpendiculairement une cible ayant par exemple 11 mm de diamètre et se tournant à une distance de 20 cm du plan contenant le capteur.

La première zone est celle où la cible se trouve à l'extérieur du cône d'action du capteur, soit 20 mm à 20 cm. Dans cette zone aucun écho ne peut être reçu, puisque tout rayon issu d'un point de cette zone passe par le capteur avec un angle supérieur à l'angle d'atténuation infini. La courbe 4 de la figure 2 confirme à peu de choses près ce fait. Le graphique de la figure 2 présente l'amplitudes de l'écho en fonction de la position du capteur.

La deuxième zone est celle où la cible 3 se trouve dans la zone d'action du capteur, mais où les rayons réfléchis par la cible n'interceptent pas le capteur 1. Dans cette zone qui va de 20 mm à 10 mm dans le cadre de l'exemple numérique donné précédemment (cible de 11 mm de diamètre), la présence d'écho est due à la diffraction du faisceau sur les irrégularités de la cible, en particulier sur les bords. La courbe 4 de la figure 3 montre que vers ±10 mm on observe un changement de courbure.

La troisième zone est celle où le capteur reçoit le faisceau réfléchi par la cible. Il existe bien entendu un maximum puisque le système est symétrique.

Dans le cas où l'axe 5 du capteur 1 (voir figure 3) fait un angle A avec l'axe 6 de la cible 3, la séparation en trois zones reste valable mais plusieurs phénomènes sont à remarquer :
- l'écho correspondant à la courbe 7 (figure 2), pour un angle A de 2,5°, et à la courbe 8 (figure 2), pour un angle A de 5°, devient totalement dissymétrique à cause d'un phénomène d'interférence apparaissant après le premier maximum dans le sens des x croissants;
- le premier maximum ne correspond pas avec l'axe du capteur passant par le centre de la cible, mais un peu avant dans le sens des x croissants;
- si on se situe dans la deuxième zone on constate un phénomène tout à fait intéressant pour la réalisation de la présente invention.

Sur la figure 2 on a tracé une droite horizontale 9 (amplitude constante passant dans la zone 2. On s'aperçoit que du côté droit des courbes, cette droite horizontale intercepte les trois courbes 4, 7 et 8 avec des intervalles correspondant très exactement au décalage à l'origine créé par la rotation du capteur. Du côté gauche, l'intervalle est quelconque à cause de la déformation des courbes due aux interférences.

On peut expliquer ce phénomène de la façon suivante : dans la zone 2 les échos étaient dus essentiellement aux phénomènes de diffraction sur les bords de la cible. Il est donc normal qu'une inclinaison de cette dernière (ou du capteur, ce qui revient au même) n'influe pas sur l'amplitude des échos, puisque par définition la diffraction ne crée pas de directions privilégiées.

Les trois portions de courbe 10, 11 et 12 situées respectivement sur la partie droite des courbes 4, 7, et 8 de la figure 2 correspondant à la zone 2, soit environ sur 10 mm, se superposent presque parfaitement.

On peut remarquer que si on crée un seuil de détection se situant dans la zone 2, et valable jusqu'à une angulation maximale pré-définie, on pourra déterminer avec precision la position de la cible, à condition que l'on se situe géométriquement du côté où l'axe de visée du capteur fait un angle < 90° avec le plan de la cible au moment où cet axe aborde la cible.

La présente invention peut être utilisée pour déterminer le positionnement d'une bride immergée et le cas échéant pour effectuer la connexion d'un élément (ou connecteur) sur cette bride.

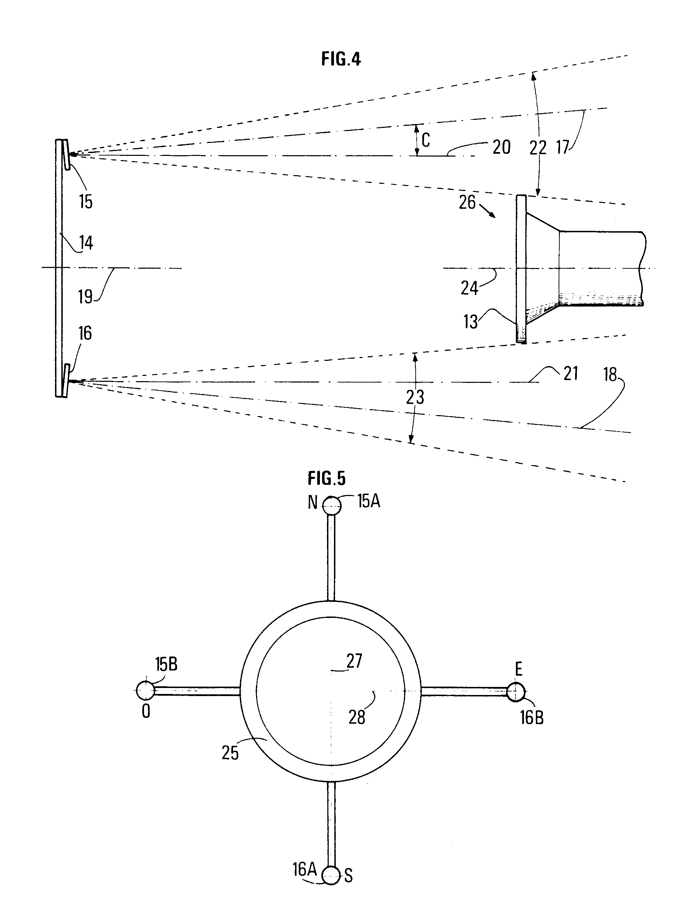

La référence 13 sur la figure 4 désigne le plan de la bride dont il faut déterminer le positionnement ou la localisation.

La référence 14 désigne un bâti supportant au moins deux capteurs 15 et 16. Les demi-axes d'émission de ces capteurs font entre eux un angle donné B non nul mais ne se croise pas dans la direction de l'émission. En fait leur point d'intersection se trouve en arrière des capteurs lorsque l'on considère le sens d'émission de ceux-ci. Par demi-axe d'émission d'un capteur, on entend pour un capteur ayant une pastille d'émission cylindrique et plane, le demi-axe issu du centre de cette pastille, perpendiculaire à cette pastille et qui est orienté dans le sens d'émission de la pastille.

La référence 19 de la figure 4 désigne l'axe principal du couple de capteurs 15 et 16, qui est défini comme étant la bissectrice de l'angle formé B par les axes supportant les demi-axes d'émission des deux capteurs 15 et 16.

Les références 20 et 21 désignent respectivement les demi-axes parallèles à l'axe principal 19, issus respectivement du centre des capteurs 15 et 16 et qui sont orientés dans le sens de l'émission de ces capteurs.

Les demi-axes d'émission 17 et 18 font un angle C = B/2 avec l'axe principal. C'est la divergence des deux demi-axes d'émission qui permet de définir le positionnement de la bride en utilisant le phénomène de diffraction. Des essais concluant ont été effectués avec un angle C sensiblement égal à 5°.

Les références 22 et 23 désignent respectivement les cônes d'émission des capteurs 15 et 16. Ces cônes sont représentés en pointillés.

Deux procédures de centrage sont possibles, à partir du moment de mise en service du dispositif selon l'invention :
- la première consiste à placer les capteurs 15 et 16 de telle façon que les bords de la bride (bride centrée) interceptent toujours les lobes d'action des capteurs. Cette procédure permettrait de centrer la bride dans les deux plans en équilibrant l'amplitude des deux capteurs symétriques par rapport à l'axe. L'inconvénient est que le bord des lobes n'est pas parallèle à l'axe du connecteur, et que d'autre part, même dans le cas où deux échos seraient obtenus sur les deux capteurs, on n'aurait pas la certitude qu'il s'agit d'écho de diffraction.
- la deuxième méthode consiste à laisser un espace entre le bord de la bride et la zone d'action du capteur ; ceci est le cas de la figure 4. La mesure consiste dans ce cas à faire décrire à la bride de petits mouvements sur une perpendiculaire à l'axe 24 de la bride jusqu'à apparition d'échos d'amplitudes déterminés. Le centrage consiste à placer la bride au centre du segment ainsi décrit. Le bras manipulateur supportant la bride participe donc à la mesure de façon active.

Cette méthode paraît plus sûre que la première.

La présente invention peut être utilisée pour réaliser la connexion d'un connecteur (25) avec une bride (26). Dans l'exemple qui suit et qui illustre une telle connexion, le connecteur est solidaire d'un bâti portant deux couples de capteurs (15A, 16A et 15B, 16B) identiques à celui présenté précédemment dans la présente description dont les axes principaux sont superposés, les deux couples de capteurs étant décalés de 90°.

Afin de faciliter la compréhension de la procédure de connexion, on a désigné par Nord et Sud et Est et Ouest les déplacements suivant les directions définies par chaque couple de capteurs.

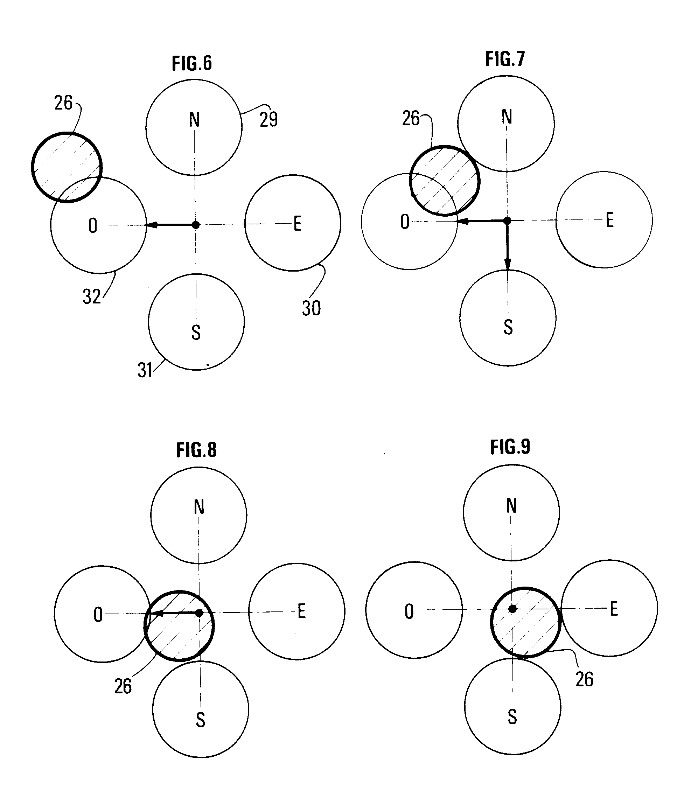

Les capteurs 15A, 16A, 15B et 16B sont également désignés respectivement Nord, Sud, Ouest et Est. Ainsi un déplacement suivant l'axe 27 joignant les capteurs Sud et Nord, et se faisant dans le sens de Sud vers Nord est dit un déplacement Nord, un déplacement de même direction mais de sens opposé est dit un déplacement Sud. De même un déplacement suivant l'axe 28 joignant les capteurs Ouest et Est, et se faisant dans les sens de Ouest vers Est est dit un déplacement Est et un déplacement dans le sens opposé est un déplacement Ouest. Ainsi bien que les désignations Nord, Sud, Est et Ouest n'aient rien a voir avec les 4 points cardinaux géographiques, le mécanisme de désignation des déplacement est le même. Pour réaliser cette connexion on effectue plusieurs tâches dont la première est une tâche de préparation qui consiste à amener le connecteur à une distance inférieure à une distance donnée et dans une position extrême donnée à partir desquelles le dispositif selon l'invention réalisera la connexion. La figure 6 présente la position de la bride 26 qui est hachurée, à la fin de la phase de préparation. Les cercles 29, 30, 31 et 32 représentent respectivement les traces de la périphérie des lobes des capteurs respectifs Nord, Est, Sud et Ouest dans un plan contenant la bride. La trace des lobes a été représentée de manière approchée par des cercles. On a désigné au centre de chaque trace le capteur qui en est la cause.

A partir de la situation représentée à la figure 6 on peut réaliser la procédure de connexion, éventuellement automatique, par le dispositif selon l'invention. Cette procédure comporte plusieurs tâches parmi lesquelles certaines vont être décrites dans ce qui suit.

La tâche de présentation consiste à prendre en compte les données géographiques de la bride (cap, site, et la hauteur de la bride par rapport au sol) pour aligner l'axe du connecteur muni de l'anneau ou bâti de mesure (repère R_{A}) avec l'axe de la bride (repère R_{B}). Après l'exécution de la tâche, les coordonnées du repère R_{B} dans le repère R_{A} se trouvent à l'intérieur d'intervalles donnés prédéterminés.

La tâche de recherche consiste à déplacer le connecteur dans le plan des capteurs qui est presque orthogonal à l'axe de la bride, à la recherche du premier écho significatif d'une mesure de distance connecteur/bride. Ce déplacement peut être réalisé par pas suivant une trajectoire définie à l'avance (créneaux, spirale...) ou aléatoire uniformément distribuées.

Dès que l'anneau de mesure détecte un écho significatif à une distance réelle connecteur/bride, la tâche "Recherche" donne la main à la tâche "Localisation".

Quand un écho a été trouvé, il est nécessaire de centrer le connecteur à mieux qu'une valeur prédéterminée servant de tolérance, par exemple 40 mm, c'est-à-dire de faire entrer la bride à l'intérieur de l'espace défini par les lobes des différents capteurs.

Pour ce faire on peut utiliser la procédure suivante :
Le capteur N déclenche un déplacement vers le Nord, ou un arrêt d'un déplacement vers le Sud.
Le capteur E déclenche un déplacement vers l'Est, ou l'arrêt d'un déplacement vers l'Ouest.
Le capteur S déclenche un déplacement vers le Sud, ou l'arrêt d'un déplacement vers le Nord.
Le capteur O déclenche un déplacement vers l'Ouest, ou l'arrêt d'un déplacement vers l'Est.

par déplacement vers une direction donnée (par exemple Nord) on entend la direction déterminée par la droite passant par le capteur ayant pour référence la lettre initiale de la direction donnée (Nord) et le centre du connecteur. Il ne s'agit pas de lieux géographiques.

Les figures 6 à 9 représentent la trajectoire qui suivra le réseau de capteurs en appliquant la méthode ci-dessus pour la configuration de départ représentée à la première figure 6.

Les flêches au centre des figures 6 à 9 désignent le sens des différents déplacement.

On voit bien que quelle que soit la position initale la procédure sera toujours convergente.

A la figure 9 la bride est localisée.

On peut alors réaliser la procédure d'approche et de pénétration. Cette procédure comporte deux tâches qui sont réitérées jusqu'à la connexion finale. La tâche de centrage se fera par talonnage sur les les lobes d'action des capteurs. Une fois ce centrage effectué, on provoquera la tâche d'avancement qui effectuera une avancée par pas, éventuellement variables, en fonction de la distance qui sépare la bride et le connecteur. A la fin de chaque pas on effectue une tâche de centrage.

Ces deux tâches ainsi que la tâche de localisation peuvent être gérées par un calculateur de commande d'un robot manipulateur, puisque c'est le même anneau de mesure qui décide de la "direction" et du "pas" de déplacement du connecteur.

On a envisagé deux couples de deux capteurs Nord, Sud et Est, Ouest ; le principe de cette méthode est aussi applicable au cas où il n'y a que trois capteurs distribués sur un cercle. Dans l'exemple précédent chacun d'eux étant éventuellement décalé de 120° par rapport à l'autre.

## Revendications

1. Méthode de positionnement d'un élément présentant un axe par rapport à au moins un couple de capteurs émetteurs-récepteurs acoustiques, caractérisée en ce que :
- on émet des signaux au moyen desdits capteurs acoustiques en direction de l'élément, ledits signaux étant émis chacun sous la forme d'un lobe d'émission-réception de forme déterminée,
- on fait décrire à l'élément de petits mouvements ayant une composante perpendiculaire à son axe jusqu'à apparition d'échos d'amplitude déterminée provenant des ondes acoustiques diffractées par ledit élément en repérant les positions relatives de l'élément par rapport au couple de capteurs à la réception des ondes diffractées, et
- on positionne l'élément au centre du segment limité par lesdites positions relatives déterminées à l'étape précédente.

2. Méthode selon la revendication 1, caractérisée en ce qu'au cours de ladite étape de positionnement d'un élément, on ne tient compte des ondes diffractées dudit cône d'émission d'ondes uniquement lorsque l'angle que fait l'axe d'émission dudit capteur avec un plan dudit élément est inférieur à 90° et lorsqu'au moins un desdits capteurs et ledit élément sont en mouvement l'un par rapport à l'autre.

3. Méthode selon l'une des revendications précédentes, caractérisée en ce que l'on forme au moins un couple de deux capteurs (15, 16) dont les axes d'émission (17, 18) appartiennent à un même plan et en ce que lesdits axes forment entre eux un angle non nul (B), le point de rencontre desdits axes étant situé en amont desdits capteurs en considérant leur sens d'émission.

4. Méthode de positionnement d'un élément selon la revendication 1, caractérisée en ce que l'on utilise des capteurs d'émission-réception acoustiques et qu'au moins trois desdits capteurs acoustiques ont des directions d'émission divergentes différentes.

5. Méthode de positionnement d'un élément selon la revendication 4, caractérisée en ce que l'on utilise quatre capteurs acoustiques ayant des directions d'émission divergentes.

6. Méthode de positionnement d'un élément selon la revendication 4, caractérisée en ce que l'on répartit au moins trois desdits capteurs sur un cercle de façon à ce que l'axe d'émission de chacun desdits capteurs forme un angle supérieur ou égal à 5° avec un axe central perpendiculaire à un plan contenant ledit cercle, ledit axe central passant par le centre dudit cercle, chaque point de rencontres desdits axes d'émission avec ledit axe central étant situé en avant dudit cercle, en considérant le sens d'émission des capteurs.

7. Méthode de positionnement d'un élément selon la revendication 4, caractérisée en ce que l'on place au moins trois desdits capteurs sensiblement dans un même plan de façon à ce que les directions d'émission divergentes sont orientées dans un même demi-espace limité par ledit plan.

## Claims

1. A method for positioning an element having an axis relative to at least one pair of acoustic emission-reception sensors, characterised in that:
- signals are emitted by the acoustic sensors in the direction of the element, each of the signals being emitted in the form of an emission-reception lobe of a predetermined form,
- the element is made to describe small movements having a component perpendicular to its axis until echoes of a given amplitude appear from the acoustic waves diffracted by the element whilst searching the relative positions of the element in relation to the pair of sensors on reception of the diffracted waves, and
- the element is positioned at the centre of the segment delineated by the relative positions ascertained during the previous phase.

2. Method in accordance with claim 1, characterised in that during the phase of positioning an element, account is taken of the waves diffracted from the emission cone of the waves only when the angle made by the emission axis of the sensor with a plane of the element is less than 90° and when at least one of the sensors and the element are moving in relation to one another.

3. Method in accordance with one of the previous claims, characterised in that at least one pair of sensors (15, 16) is made, of which the emission axes (17, 18) belong to a same plane and in that the axes form between them an angle that is not zero (B), the meeting point of the axes being located upstream of the sensors viewed from their emission direction.

4. Method of positioning an element in accordance with claim 1, characterised in that acoustic emission-reception sensors are used and at least three of the acoustic sensors have different divergent emission directions.

5. Method of positioning an element in accordance with claim 4, characterised in that four acoustic sensors with divergent emission directions are used.

6. Method of positioning an element in accordance with claim 4, characterised in that at least three of the sensors are arranged around a circle in such a way that the emission axis of each of the sensors forms an angle of more than or equal to 5° with a central axis perpendicular to a plane containing the circle, the central axis passing through the centre of the circle and each meeting point of the emission axes with the central axis being located in front of the circle as viewed from the emission directions of the sensors.

7. Method of positioning an element in accordance with claim 4, characterised in that at least three of the sensors are placed substantially in a same plane in such as way that the divergent emission directions are oriented in a same half-space delineated by the plane.

## Patentansprüche

1. Verfahren zum Positionieren eines Elements, das über eine Achse bezogen auf wenigstens ein Paar von Sender-Empfänger-Schallfühlern verfügt, dadurch gekennzeichnet, daß:
- man Signale vermittels dieser Schallfühler in Richtung des Elements aussendet, wobei diese Signale jeweils in Form einer Sende-Empfangs-Keule bestimmter Form ausgesendet werden,
- man das Element kleine Bewegungen mit einer Komponente senkrecht zu seiner Achse bis zum Auftreten von Echos bestimmter Amplitude, die von durch dieses Element gebeugten Wellen stammen, beschreiben läßt, indem man die Relativpositionen des Elements bezogen auf das Paar von Fühlern bei Empfang der gebeugten Wellen markiert und
- man das Element in der Mitte des Segments positioniert, das durch diese im vorhergehenden Schritt bestimmten Relativpositionen begrenzt ist.

2. Verfahren nach Anspruch 1, dadurch gekennzeichnet, daß während dieses Positionierungsschritts eines Elements man von diesem Wellensendepegel nur diejenigen gebeugten Wellen berücksichtig, bei denen der Winkel, die die Emissionsachse dieses Fühlers mit einer Ebene dieses Elementes bildet, kleiner als 90° ist und wenn wenigstens einer dieser Fühler und dieses Element bezüglich einander in Bewegung sind.

3. Verfahren nach einem der vorhergehenden Ansprüche, dadurch gekennzeichnet, daß man wenigstens ein Paar der beiden Fühler (15, 16) bildet, deren Sendeachsen (17, 18) zu ein und der gleichen Ebene gehören und daß diese Achsen untereinander einen Winkel ungleich Null (B) bilden, wobei der Punkt, wo die beiden Achsen aufeinander treffen, sich vor diesen Fühlern in ihrer Senderichtung gesehen, befindet.

4. Verfahren zum Positionieren eines Elements gemäß Anspruch 1, dadurch gekennzeichnet, daß man Sende-Empfangs-Schallfühler verwendet und daß wenigstens drei dieser Schallfühler unterschiedliche divergente Senderichtungen haben.

5. Verfahren zum Positionieren eines Elements gemäß Anspruch 4, dadurch gekennzeichnet, daß man vier Schallfühler verwendet, die divergierende Senderichtungen haben.

6. Verfahren zum Positionieren eines Elements gemäß Anspruch 4, dadurch gekennzeichnet, daß man wenigstens drei dieser Fühler auf einem Kreis derart verteilt, daß die Sendeachse jedes dieser Fühler einen Winkel größer oder gleich 5° mit einer mittigen Achse bildet, die senkrecht zu einer diesen Kreis enthaltenden Ebene ist, wobei diese mittige Achse durch die Mitte dieses Kreises geht und jeder Treffpunkt dieser Sendeachse mit dieser mittigen Achse sich vor diesem Kreis in Senderichtung der Fühler gesehen, befindet.

7. Verfahren zum Positionieren eines Elements gemäß Anspruch 4, dadurch gekennzeichnet, daß man wenigstens drei dieser Fühler im wesentlichen in ein und der gleichen Ebene derart anordnet, daß die divergenten Senderichtungen in ein und dem gleichen durch diese Ebene begrenzten Halbraum orientiert sind.
